# EUROPEAN PATENT APPLICATION

(11) **EP 4 529 312 A1**
(43) Date of publication of application: **26.03.2025**
(21) Application number: 22942084.9
(22) Date of filing: 19.05.2022
(51) Int. Cl.: H04W 72/00

(54) **MEASUREMENT GAP CONFIGURATION METHOD, APPARATUS, AND READABLE STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2022/093900
(87) International publication number: WO 2023/221044

(57) **Abstract**

The present disclosure relates to a measurement gap configuration method, an apparatus, and a readable storage medium. The method comprises: receiving measurement configuration information sent by a network device, wherein the measurement configuration information comprises a plurality of pieces of measurement gap configuration information, and different pieces of measurement gap configuration information correspond to different measurement objects; and performing measurement on the measurement objects according to the measurement configuration information and a threshold value, wherein the threshold value is used for controlling the overheads of a measurement gap. **In** the method of the present disclosure, after receiving the plurality of pieces of measurement gap configuration information configured by the network device, a user equipment can adaptively perform measurement according to a relationship between the plurality of pieces of measurement gap configuration information and the threshold value that is used for controlling the overheads of a measurement gap, such that the overheads of the measurement gap are reduced, and the continuity of data scheduling of a serving cell can be ensured.

## Description

### TECHNICAL FILED

The present disclosure relates to the field of wireless communication technology and, in particular, to a method and device for configuring a measurement gap and a readable storage medium.

### BACKGROUND

In a New Radio (NR) system, the User Equipment (UE) may perform measurements on the neighboring area during measurement gaps (also called Meas Gaps). During the measurement gaps, no data transmission is performed for the serving cell. Depending on the different measurement purposes, the network device may configure multiple sets of measurement gaps for the UE.

The problem that measurement gaps in scenarios with multiple sets of measurement gaps occupy too much scheduling overhead needs to be addressed.

### SUMMARY

The present disclosure provides a method and device for configuring a measurement gap and a readable storage medium.

In a first aspect, an embodiment of the present disclosure provides a method for configuring a measurement gap, performed by user equipment, the method including:
receiving measurement configuration information sent by a network device, wherein the measurement configuration information includes a plurality of pieces of measurement gap configuration information, different pieces of measurement gap configuration information corresponding to different measurement objects; and
performing a measurement on a measurement object based on the measurement configuration information and a threshold value, wherein the threshold value is configured for measurement gap overhead control.

In a second aspect, an embodiment of the present disclosure provides a method for configuring a measurement gap, performed by a network device, the method including:
sending measurement configuration information to user equipment, wherein the measurement configuration information includes a plurality of pieces of measurement gap configuration information, different pieces of measurement gap configuration information corresponding to different measurement objects.

In a third aspect, an embodiment of the present disclosure provides a communication device that may be used to perform steps performed by user equipment in the first aspect described above or in any of the possible designs of the first aspect. The user equipment may implement functions in each of the above methods by means of a hardware structure, a software module, or a hardware structure combined with a software module.

In a fourth aspect, an embodiment of the present disclosure provides a communication device that may be used to perform steps performed by a network device in the second aspect described above or in any of the possible designs of the second aspect. The network device may implement functions in each of the above methods by means of a hardware structure, a software module, or a hardware structure combined with a software module.

In a fifth aspect, an embodiment of the present disclosure provides a communication device including a processor and a memory, wherein the memory is configured to store a computer program; and the processor is configured to execute the computer program to implement the first aspect or any of the possible designs of the first aspect.

In a sixth aspect, an embodiment of the present disclosure provides a communication device including a processor and a memory, wherein the memory is configured to store a computer program; and the processor is configured to execute the computer program to implement the second aspect or any of the possible designs of the second aspect.

In a seventh aspect, an embodiment of the present disclosure provides a computer-readable storage medium, the computer-readable storage medium having stored therein instructions (or called a computer program, a program) that, when invoked for execution on a computer, cause the computer to implement the first aspect described above or any of the possible designs of the first aspect.

In an eighth aspect, an embodiment of the present disclosure provides a computer-readable storage medium, the computer-readable storage medium having stored therein instructions (or called a computer program, a program) that, when invoked for execution on a computer, cause the computer to implement the second aspect described above or any of the possible designs of the second aspect.

It should be understood that the above general description and the detailed description that follows are exemplary and explanatory only and do not limit the present disclosure.

### BRIEF DESCRIPTION OF THE DRAWINGS

The accompanying drawings illustrated herein are used to provide a further understanding of the embodiments of the present disclosure and form part of the present application. The schematic embodiments of the present disclosure and illustrations thereof are used to explain the embodiments of the present disclosure and do not constitute an undue limitation of the embodiments of the present disclosure. In the accompanying drawings:

The accompanying drawings herein, which are incorporated into and form a part of the specification, illustrate examples consistent with the embodiments of the present disclosure and are used in conjunction with the specification to explain the principles of the embodiments of the present disclosure.
FIG. 1 is a schematic diagram of a wireless communication system architecture provided by embodiments of the present disclosure.
FIG. 2 is a flowchart of a method for configuring a measurement gap illustrated according to an exemplary embodiment.
FIG. 3 is a flowchart of a method for configuring a measurement gap illustrated according to an exemplary embodiment.
FIG. 4 is a flowchart of a method for configuring a measurement gap illustrated according to an exemplary embodiment.
FIG. 5 is a flowchart of a method for configuring a measurement gap illustrated according to an exemplary embodiment.
FIG. 6 is a flowchart of a method for configuring a measurement gap illustrated according to an exemplary embodiment.
FIG. 7 is a schematic diagram of a measurement gap configuration illustrated according to an exemplary embodiment.
FIG. 8 is a flowchart of a method for configuring a measurement gap illustrated according to an exemplary embodiment.
FIG. 9 is a schematic diagram of another measurement gap configuration illustrated according to an exemplary embodiment.
FIG. 10 is a flowchart of another method for configuring a measurement gap illustrated according to an exemplary embodiment.
FIG. 11 is a structural diagram of a device for configuring a measurement gap illustrated according to an exemplary embodiment.
FIG. 12 is a block diagram of a device for configuring a measurement gap illustrated according to an exemplary embodiment.
FIG. 13 is a structural diagram of another device for configuring a measurement gap illustrated according to an exemplary embodiment.
FIG. 14 is a block diagram of another device for configuring a measurement gap illustrated according to an exemplary embodiment.

### DETAILED DESCRIPTION

Embodiments of the present disclosure are further described in connection with the accompanying drawings and specific implementations.

Exemplary embodiments will be described herein in detail, examples of which are represented in the accompanying drawings. When the following description relates to the accompanying drawings, the same numerals in the different accompanying drawings indicate the same or similar elements unless otherwise indicated. The implementations described in the following exemplary embodiments do not represent all implementations consistent with embodiments of the present disclosure. Rather, they are only examples of devices and methods consistent with some aspects of the present disclosure as detailed in the appended claims.

Terms used in the embodiments of the present disclosure are used solely for the purpose of describing particular embodiments and are not intended to limit the embodiments of the present disclosure. The singular forms "a/an" and "the" as used in the embodiments of the present disclosure and in the appended claims are also intended to encompass the plural form, unless the context clearly indicates otherwise. It should also be understood that the term "and/or" as used herein refers to and encompasses any or all possible combinations of one or more of the associated listed items.

It should be understood that while the terms "first," "second," "third," etc. may be employed in embodiments of the present disclosure to describe various types of information, such information should not be limited by these terms. These terms are only used to distinguish the same type of information from one another. For example, without departing from the scope of embodiments of the present disclosure, first information may also be referred to as second information, and similarly, second information may be referred to as first information. Depending on the context, the words "if..." and "in response to..." as used herein may be interpreted as "at the time of... ", "when..." or "in response to determining..."

Embodiments of the present disclosure are described in detail below, examples of which are illustrated in the accompanying drawings, wherein the same or similar labeling throughout denotes the same or similar elements. The embodiments described below by reference to the accompanying drawings are exemplary and are intended to be used to explain the present disclosure and are not to be construed as limiting the present disclosure.

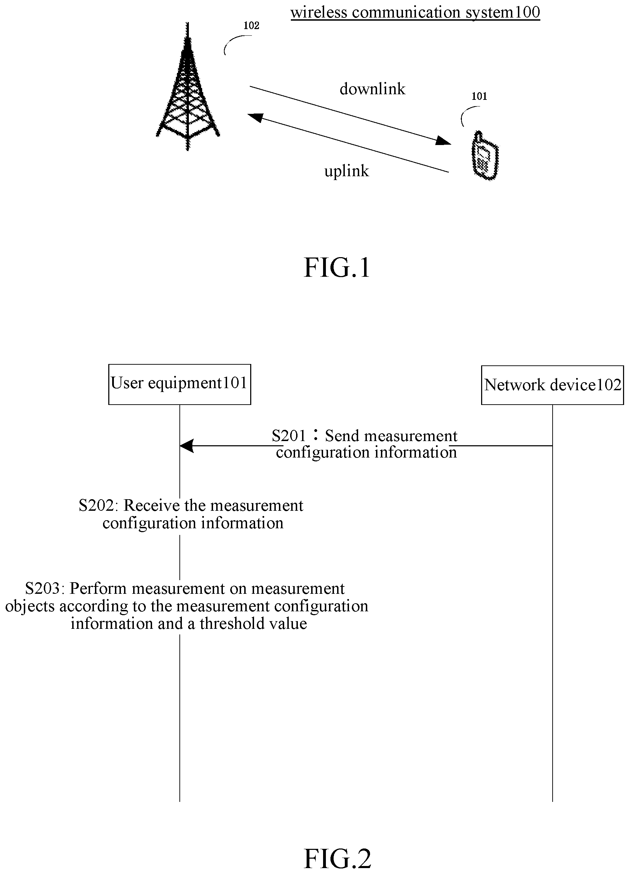

As shown in FIG. 1, an embodiment of the present disclosure provides a method for configuring a measurement gap that may be applied to a wireless communication system 100, which may include user equipment 101 as well as a network device 102. The user equipment 101 is configured to support carrier aggregation, and the user equipment 101 may be connected to a plurality of carrier units of the network device 102, including a primary carrier unit and one or more secondary carrier units.

It should be understood that the above wireless communication system 100 may be applicable to both low-frequency and high-frequency scenarios. The application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) communication system, a future 5th-generation (5G) system, a new radio (NR) communication system, or a future evolved public land mobile network (PLMN) system, etc.

The user equipment 101 shown above may be a user equipment (UE), a terminal, an access terminal, a terminal unit, a terminal station, a mobile station (MS), a remote station, a remote terminal, a mobile terminal, a wireless communication device, a terminal agent, or a user device, etc. The user equipment 101 may be equipped with a wireless transceiver function, which is capable of communicating (e.g., wirelessly) with one or more network devices of one or more communication systems and accepting network services provided by network devices. The network devices herein include, but are not limited to, the network device 102 as shown in the drawings.

The user equipment 101 may be a cellular telephone, a cordless telephone, a session initiation protocol (SIP) telephone, a wireless local loop (WLL) station, a personal digital assistant (PDA) device, a handheld device with wireless communication capabilities, a computing device or the other processing device connected to a wireless modem, an in-vehicle device, a wearable device, a user device in a future 5G network or in a future evolved PLMN network, and so on.

The network device 102 may be an access network device (or called access network site). The access network device refers to a device that has the function of providing network access, such as a radio access network (RAN) base station and the like. The network device 102 may specifically include a base station (BS), or include a base station as well as a radio resource management device for controlling the base station, and the like. The network device 102 may also include a relay station (a relay device), an access point, a base station in a future 5G network, a base station in a future evolved PLMN network, or a NR base station, and the like. The network device 102 may be a wearable device or an in-vehicle device. The network device 102 may also be a communication chip having a communication module.

For example, the network device 102 includes, but is not limited to, a next generation base station (gnodeB or gNB) in 5G, an evolved node B (eNB) in an LTE system, a radio network controller (RNC), a node B (NB) in a WCDMA system, a wireless controller under a CRAN system, a base station controller (BSC), a base transceiver station (BTS) in a GSM system or a CDMA system, a home base station (e.g., home evolved nodeB or home node B (HNB)), a baseband unit (BBU), a transmission and receiving point (TRP), a transmitting point (TP), or a mobile switching center.

An embodiment of the present disclosure provides a method for configuring a measurement gap. Referring to FIG. 2, FIG. 2 is a flowchart of a method for configuring a measurement gap illustrated according to an exemplary embodiment. As shown in FIG. 2, the method includes steps S201~S203, specifically:

Step S201, sending, by the network device 102, measurement configuration information to the user equipment 101, where the measurement configuration information includes a plurality of pieces of measurement gap configuration information, and different pieces of measurement gap configuration information correspond to different measurement objects.

Step S202, receiving, by the user equipment 101, the measurement configuration information sent by the network device 102, where the measurement configuration information includes a plurality of pieces of measurement gap configuration information, and different pieces of measurement gap configuration information correspond to different measurement objects.

Step S203, performing, by the user equipment 101, a measurement on a measurement object based on the measurement configuration information and a threshold value, where the threshold value is used for measurement gap overhead control.

In some possible implementations, the threshold value is used to control a maximum value of the measurement gap overhead, and the user equipment 101 may control the measurement gap overhead to be less than or equal to the threshold value so that the measurement gap overhead is not too large.

In some possible implementations, the threshold value may be agreed upon in a protocol.

In some possible implementations, the threshold value may be determined by the network device 102.

In some possible implementations, the threshold value may be set as a length of time, or set as a percentage.

In embodiments of the present disclosure, the network device 102 may configure the user equipment 101 with a plurality of pieces of measurement gap configuration information for different measurement objects, and the user equipment 101 can adaptively perform measurements based on the relationship between the plurality of pieces of measurement gap configuration information and the threshold value used for the measurement gap overhead control, thereby facilitating the reduction of the overhead of the measurement gaps so as to be able to ensure the continuity for scheduling data by the serving cell, and to maintain the performance of network throughput.

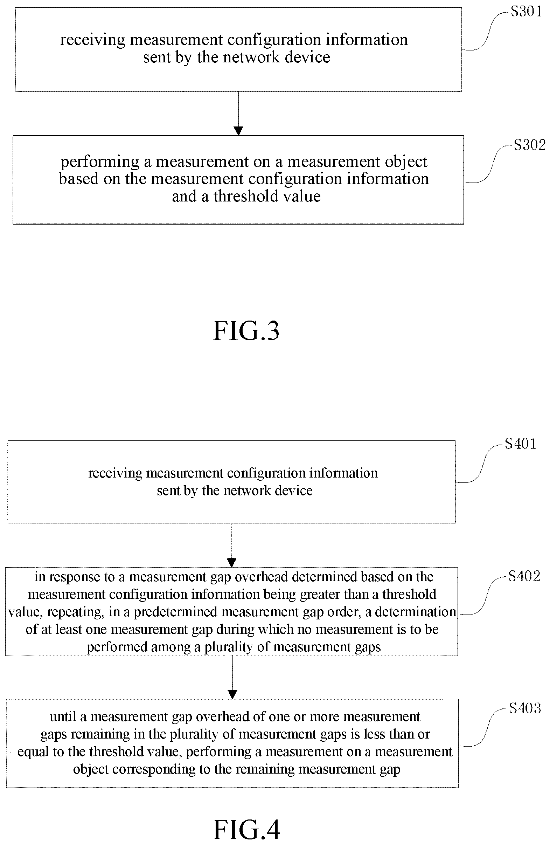

An embodiment of the present disclosure provides a method for configuring a measurement gap, applied to the user equipment 101. With reference to FIG. 3, FIG. 3 is a flowchart of a method for configuring a measurement gap illustrated according to an exemplary embodiment. As shown in FIG. 3, the method includes steps S301~S302, specifically:
Step S301, receiving, by the user equipment 101, measurement configuration information sent by the network device 102, where the measurement configuration information includes a plurality of pieces of measurement gap configuration information, and different pieces of measurement gap configuration information correspond to different measurement objects.
Step S302, performing, by the user equipment 101, a measurement on a measurement object based on the measurement configuration information and a threshold value, where the threshold value is used for measurement gap overhead control.

When the measurement configuration information in all embodiments of the present disclosure includes a plurality of pieces of information, the number of these pieces corresponds to the number of pieces of the measurement gap configuration information.

Alternatively, in some possible implementations, the measurement configuration information may be one piece of information and a plurality of pieces of measurement gap configuration information is included in this piece of measurement configuration information. In some examples, this piece of measurement configuration information may also include: a plurality of pieces of measurement gap configuration information and a threshold value.

In some possible implementations, when the user equipment 101 performs the measurement on the measurement object, the measurement object may correspond to a parameter related to a neighboring cell that is in the same system as the serving cell, or the measurement object may correspond to a parameter related to a neighboring cell that is in a different system from the serving cell.

In some possible implementations, the measurement configuration information may indicate a Measurement Object (MO), a Measurement Gap Length (MGL), and a Measurement Gap Repetition Period (MGRP) corresponding to each piece of measurement gap configuration information. Alternatively, each piece of measurement gap configuration information indicates the MO, the MGL, and the MGRP corresponding to this measurement gap. In this way, each piece of measurement configuration information corresponds to one kind of MO, one kind of MGL, and one kind of MGRP, respectively, thereby allowing different pieces of measurement configuration information to correspond to different measurement purposes.

In an example, the measurement configuration information includes measurement configuration information for a first mode (Gap Pattern#1), measurement configuration information for a second mode (Gap Pattern#2), and measurement configuration information for a third mode (Gap Pattern#3), and the measurement configuration information also indicates:
Gap Pattern#1 is used for Mobility measurement (MO measurement) with MGL of 6ms and MGRP of 20ms;
Gap Pattern#2 is used for Positioning measurement with MGL of 10ms and MGRP of 80ms;
Gap Pattern #3 is used for Multiple SIM measurement (MUSIM measurement) with MGL of 10ms and MGRP of 80ms.

In some possible implementations, the user equipment 101, based on the plurality of pieces of measurement configuration information, may adaptively perform measurements in conjunction with a relationship between a measurement gap overhead and a threshold value. The measurement gap overhead is used to characterize a total overhead of a corresponding number of measurement gaps during which measurements are to be performed.

In an example, in response to the measurement gap overhead being less than or equal to a threshold value, the user equipment 101 may perform measurements normally based on the plurality of pieces of measurement configuration information. In this case, the measurement gap overhead corresponds to the total overhead of the plurality of measurement gaps.

In an example, in response to the measurement gap overhead being greater than a threshold value, the user equipment 101 may selectively perform the measurements during the plurality of measurement gaps included in the measurement configuration information. In this case, the measurement gaps correspond to a total overhead of a portion of the measurement gaps that have been selected for the measurements to be performed.

In some possible implementations, the threshold value may be agreed upon in a protocol.

In some possible implementations, the threshold value may be determined by the network device 102.

In this embodiment of the present disclosure, after receiving a plurality of pieces of measurement gap configuration information configured by the network device 102, the user equipment 101 can adaptively perform measurements based on the relationship between the plurality of pieces of measurement gap configuration information and the threshold value used for measurement gap overhead control, thereby facilitating the reduction of the overhead of the measurement gaps so as to be able to ensure the continuity for scheduling data by the serving cell.

An embodiment of the present disclosure provides a method for configuring a measurement gap, applied to the user equipment 101. Referring to FIG. 4, FIG. 4 is a flowchart of a method for configuring a measurement gap illustrated according to an exemplary embodiment. As shown in FIG. 4, the method includes steps S401~S403, specifically:
Step S401, receiving, by the user equipment 101, measurement configuration information sent by the network device 102, where the measurement configuration information includes a plurality of pieces of measurement gap configuration information, and different pieces of measurement gap configuration information correspond to different measurement objects.
Step S402, in response to a measurement gap overhead determined based on the measurement configuration information being greater than a threshold value, repeating, in a predetermined measurement gap order, a determination of at least one measurement gap during which no measurement is to be performed among a plurality of measurement gaps.
Step S403, until a measurement gap overhead of one or more measurement gaps remaining in the plurality of measurement gaps is less than or equal to the threshold value, performing a measurement on a measurement object corresponding to the remaining measurement gap, where the measurement gap overhead is used to characterize a total overhead of a corresponding number of measurement gaps during which measurements are to be performed.

In some possible implementations, the predetermined measurement gap order is, for example, from the largest Measurement Gap Length (MGL) to the smallest MGL.

In some possible implementations, for a plurality of measurement gaps, namely until a measurement gap during which no measurement is to be performed is determined, the plurality of measurement gaps all serve as measurement gaps during which measurements are to be performed. Therefore, the measurement gap overhead characterizes the total overhead of the plurality of measurement gaps.

In some possible implementations, for the remaining measurement gap, following the determination of the measurement gap during which no measurement is to be performed, the plurality of measurement gaps described above during which measurements are to be performed turn into this remaining portion of the measurement gaps. Therefore, the measurement gap overhead characterizes the total overhead of this remaining portion of the measurement gaps.

In some possible implementations, during the process of determining the measurement gap during which no measurement is to be performed, when it reaches the point where the last measurement gap remains, if the corresponding measurement gap overhead is still greater than the threshold value, no measurement task for any one of the measurement gaps will be completed.

In some possible implementations, the threshold value is configured as a percentage. For example, the threshold value is configured as 30%, or 40%, or between 30% and 40%.

In some possible implementations, according to the plurality of pieces of measurement configuration information, the user equipment 101 may determine, in a first time length, a measurement gap overhead based on a ratio of a sum of Measurement Gap Lengths (MGLs) corresponding to a corresponding number of measurement gaps (included in a plurality of measurement gap configurations of the plurality of pieces of measurement configuration information described above) during which measurements are to be performed, to the first time length. The first time length is a length of time of the largest Measurement Gap Repetition Period (MGRP) of MGRPs corresponding to the plurality of pieces of measurement gap configuration information. The ratio may be a percentage value. Herein, the "corresponding number of measurement gaps during which measurements are to be performed" refers to measurement gaps, during which measurements are to be performed, that remain in the case where the result, obtained after the comparisons with the threshold value are performed sequentially based on the sum of the measurement gap overheads for all measurement gaps involved in the measurement configuration information, is greater than the threshold value.

In some possible implementations, the threshold value is configured as a time length. For example, the threshold value is configured as 30ms.

In some possible implementations, the measurement gap overhead may be correspondingly determined as: a sum of MGLs, in the first time length, corresponding to a corresponding number of measurement gaps (included in a plurality of measurement gap configurations of the plurality of pieces of measurement configuration information described above) during which measurements are to be performed. Herein, the "corresponding number of measurement gaps during which measurements are to be performed" refers to measurement gaps, during which measurements are required to be performed, that remain in the case where the result, obtained after the comparisons with the threshold value are performed sequentially based on the sum of the measurement gap overheads for all measurement gaps involved in the measurement configuration information, is greater than the threshold value.

### In a first example:

The measurement configuration information includes the measurement configuration information for the first mode (Gap Pattern#1), the measurement configuration information for the second mode (Gap Pattern#2) and the measurement configuration information for the third mode (Gap Pattern#3). In this example, the first time length is a length of time of the MGRP of Gap Pattern#2 or the MGRP of Gap Pattern#3, i.e., the first time length is 80ms.

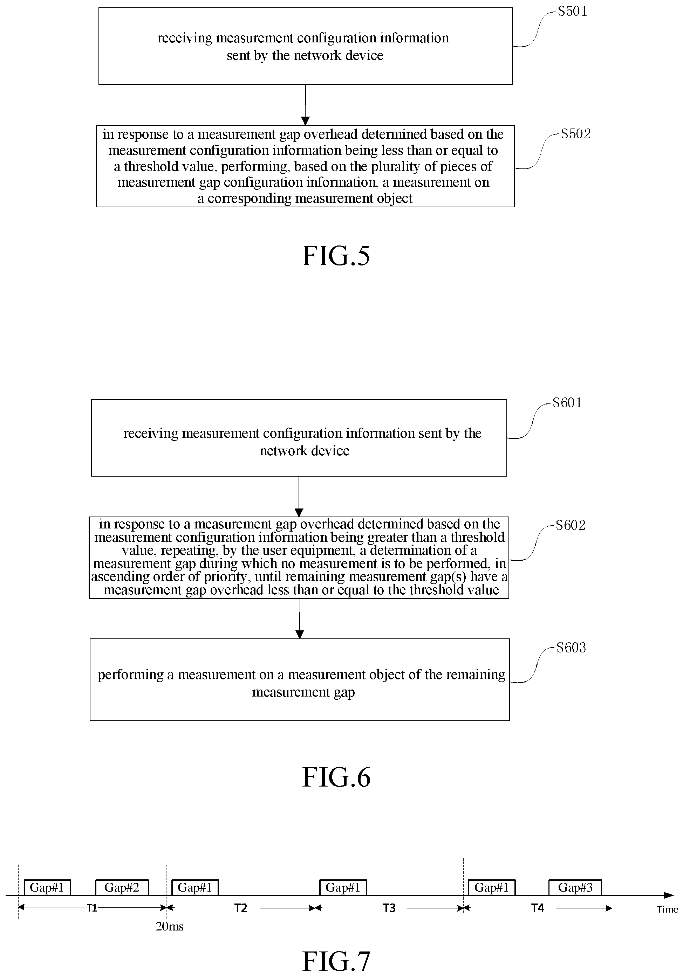

As shown in FIG. 7, in combination with the MGRPs of different pieces of measurement configuration information, it can be determined that there are four Gap Pattern#1 (Gap#1), one Gap Pattern#2 (Gap#2), and one Gap Pattern#3 (Gap#3) included in the first time length, and the sum of the MGLs of the multiple measurement gaps in the first time length is: 6×4 + 10×1 + 10×1 = 44 (ms). The measurement gap overhead for this example is: (44/80)% = 55%.

In this example, the measurement gap overhead is greater than a threshold value, and the user equipment 101 may determine at least one measurement gap during which no measurement is to be performed, in relation to the requirement or in relation to the priority. If it is determined that no measurement is to be performed during Gap Pattern#2 and Gap Pattern#3, it is determined again that the measurement gap overhead is: (6×4)/80 = 30%, which is less than or equal to the threshold value. In this example, only the measurement during Gap Pattern#1 may be performed.

### In the second example:

The measurement configuration information includes Gap Pattern#1, Gap Pattern#2, and Gap Pattern#3, and the first time length is the length of time of the MGRP of Gap Pattern#2 or the MGRP of Gap Pattern#3, i.e., the first time length is 80ms. The threshold value may be configured as 30ms.

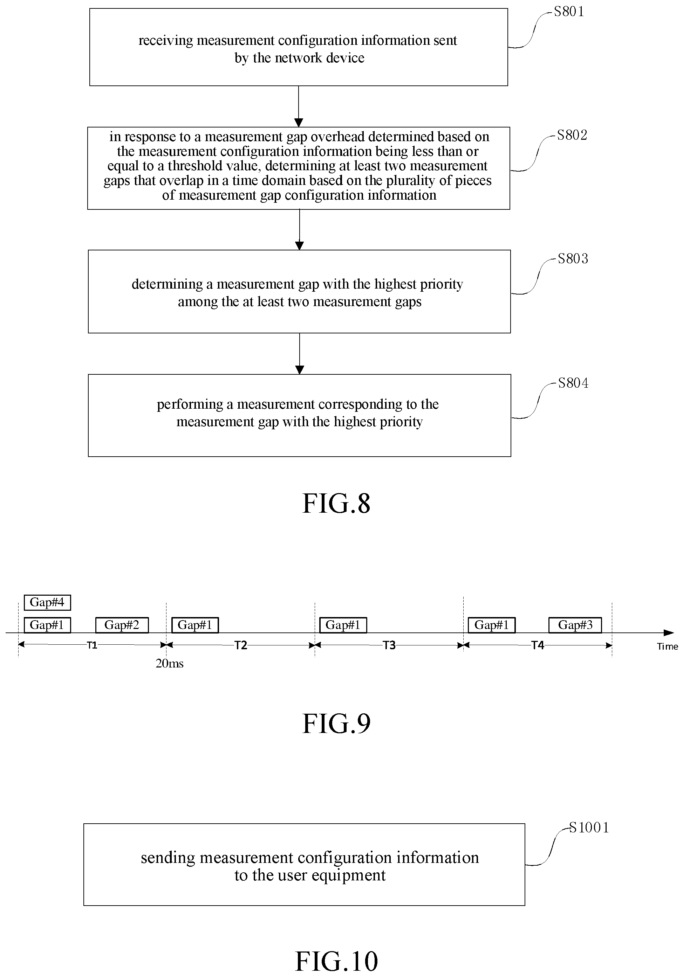

Referring to FIG. 7 or FIG. 9, in combination with the MGRPs of different pieces of measurement configuration information, it can be determined that there are four Gap#1, one Gap#2, and one Gap#3 included in the first time length, and the sum of the MGLs of these three measurement gaps, i.e., the measurement gap overhead, in the first time length is 44ms.

In this example, the measurement gap overhead is greater than the threshold value, and the user equipment 101 may determine at least one measurement gap during which no measurement is to be performed, in conjunction with the MGLs of the respective measurement gaps in order from largest to smallest. If it is determined that no measurement is to be performed during Gap Pattern#2 and Gap Pattern#3 with the largest MGL, the measurement gap overhead is again determined to be 6 × 4 = 24 (ms), which is less than the threshold value. In this example, only the measurement during Gap Pattern#1 may be performed.

In an embodiment of the present disclosure, in scenarios where the measurement gap overhead is greater than a threshold value, the user equipment 101 selectively performs measurements during the plurality of measurement gaps in order that the measurement gap overhead can be saved.

An embodiment of the present disclosure provides a method for configuring a measurement gap, applied to the user equipment 101. With reference to FIG. 5, FIG. 5 is a flowchart of a method for configuring a measurement gap illustrated according to an exemplary embodiment. As shown in FIG. 5, the method includes steps S501~S502, specifically:
Step S501, receiving, by the user equipment 101, measurement configuration information sent by the network device 102, where the measurement configuration information includes a plurality of pieces of measurement gap configuration information, and different pieces of measurement gap configuration information correspond to different measurement objects.
Step S502, in response to a measurement gap overhead determined based on the measurement configuration information being less than or equal to a threshold value, performing, based on the plurality of pieces of measurement gap configuration information, a measurement on a corresponding measurement object.

In some possible implementations, the threshold value is configured as a percentage. For example, the threshold value is configured as 30%, or 40%. Alternatively, the threshold value is configured as a time length.

In some possible implementations, the user equipment 101 may determine, in a first time length, a measurement gap overhead based on a ratio of a sum of Measurement Gap Lengths (MGLs) corresponding to a corresponding number of measurement gaps (included in a plurality of measurement gap configurations of the plurality of pieces of measurement configuration information described above) during which measurements are to be performed, to the first time length. That is, the measurement gap overhead is determined based on the MGLs of the measurement gaps that occur in the first time length. The first time length is a length of time of the largest Measurement Gap Repetition Period (MGRP) of MGRPs corresponding to the plurality of pieces of measurement gap configuration information. Herein, the "corresponding number of measurement gaps during which measurements are to be performed" refers to measurement gaps, during which measurements are required to be performed, that remain in the case where the result, obtained after the comparisons with the threshold value are performed sequentially based on the sum of the measurement gap overheads for all measurement gaps involved in the measurement configuration information, is greater than the threshold value.

In some possible implementations, in scenarios where the measurement gap overhead is less than or equal to a threshold value, the measurement on the measurement object corresponding to each measurement gap may be performed separately in accordance with the measurement configuration information. For example, if the measurement configuration information includes Gap Pattern#1, Gap Pattern#2, and Gap Pattern#3, a mobility measurement corresponding to Gap Pattern#1, a positioning measurement corresponding to Gap Pattern#2, and a multiple SIM measurement corresponding to Gap Pattern#3 may be performed respectively.

In some embodiments of the present disclosure, in a scenario where the measurement gap overhead is less than or equal to a threshold value, the user equipment 101 may perform the measurement during each measurement gap normally in accordance with the measurement configuration information.

An embodiment of the present disclosure provides a method for configuring a measurement gap, applied to the user equipment 101.

The method includes steps S301~S303:
Step S301, receiving, by the user equipment 101, measurement configuration information sent by the network device 102, where the measurement configuration information includes a plurality of pieces of measurement gap configuration information, and different pieces of measurement gap configuration information correspond to different measurement objects.
Step S302, determining, by the user equipment 101, at least two measurement gaps that overlap in a time domain based on the plurality of pieces of measurement gap configuration information.
Step S303, performing the measurement only on the measurement object of one of the at least two measurement gaps, without performing a measurement on a measurement object corresponding to a measurement gap remaining in the at least two measurement gaps.

Alternatively, the method includes steps S401~S404:
Step S401, receiving, by the user equipment 101, measurement configuration information sent by the network device 102, where the measurement configuration information includes a plurality of pieces of measurement gap configuration information, and different pieces of measurement gap configuration information correspond to different measurement objects.
Step S402, in response to a measurement gap overhead determined based on the measurement configuration information being greater than a threshold value, determining at least two measurement gaps that overlap in a time domain based on the plurality of pieces of measurement gap configuration information.
Step S403, determining, among the at least two measurement gaps, at least one measurement gap during which no measurement is to be performed, in a predetermined measurement gap order.
Step S404, in response to a measurement gap overhead of a measurement gap remaining in the at least two measurement gaps being less than or equal to the threshold value, performing a measurement only on a measurement object of the measurement gap remaining in the at least two measurement gaps.

Alternatively, the method includes steps S501~502:
Step S501, receiving, by the user equipment 101, measurement configuration information sent by the network device 102, where the measurement configuration information includes a plurality of pieces of measurement gap configuration information, and different pieces of measurement gap configuration information correspond to different measurement objects.
Step S502, in response to a measurement gap overhead determined based on the measurement configuration information being less than or equal to a threshold value, determining at least two measurement gaps that overlap in a time domain based on the plurality of pieces of measurement gap configuration information.
Step S503, performing a measurement only on a measurement object of one of the at least two measurement gaps, without performing a measurement on a measurement object corresponding to a measurement gap remaining in the at least two measurement gaps.

In some possible implementations, when at least two measurement gaps overlap in the time domain, only one of the measurement gaps may be selected for measurement.

In some possible implementations, for scenarios in which the measurement gap overhead is greater than a threshold value, if the overhead of a measurement gap, which is the only one retained that has an overlap in time domain, is still greater than the threshold value, the user equipment 101 may continue to determine the measurement gap during which no measurement is to be performed. If it is consistently unable to achieve a measurement gap overhead that is less than or equal to the threshold value, the user equipment 101 may choose not to perform this neighbor cell measurement.

In embodiments of the present disclosure, selective measurements may be performed during at least two measurement gaps that overlap in a time domain, which can not only reduce the measurement gap overhead but also mitigate collisions between overlapping measurement gaps.

An embodiment of the present disclosure provides a method for configuring a measurement gap, applied to the user equipment 101. The method includes steps S301~S302, in which the measurement gap configuration information also includes a priority of the measurement gap.

In some possible implementations, a set number of bits in the measurement gap configuration information may indicate priorities of the corresponding measurement gaps.

In an example, the measurement configuration information includes Gap Pattern#1, Gap Pattern#2, and Gap Pattern#3, in which:
Gap Pattern#1 has a priority indicated as 000;
Gap Pattern#2 has a priority indicated as 001;
Gap Pattern#3 has a priority indicated as 010.

In this case, the network device 102 may define the priority level of the three bits. For example, the priority level when only the last bit is occupied is higher than the priority level when two bits are occupied, and the priority level when the last bit is 0 is greater than the priority level when the last bit is 1. In this example, the measurement gaps are prioritized in descending order as follows: Gap Pattern#1, Gap Pattern#2 and Gap Pattern#3.

Alternatively, the network device 102 may define the priority level of the three bits. For example, the highest priority level is given when two bits are occupied, and the priority level when the last bit is 1 is greater than the priority level when the last bit is 0. In this example, the measurement gaps are prioritized in descending order as follows: Gap Pattern#3, Gap Pattern#2, and Gap Pattern#1, respectively.

In an example, the measurement configuration information includes Gap Pattern#1, Gap Pattern#2, Gap Pattern#3, and Gap Pattern#4. Gap Pattern#4 is used for Non-Terrestrial Network (NTN) measurement, in which:
Gap Pattern#1 has a priority indicated as 000;
Gap Pattern#2 has a priority indicated as 001;
Gap Pattern#3 has a priority indicated as 010;
Gap Pattern#4 has a priority indicated as 011.

In this case, when the priority occupies two bits, it can still satisfy that the priority level when the last bit is 0 is greater than the priority level when the last bit is 1. For example, in this case, the measurement gaps are prioritized in descending order as follows: Gap Pattern#1, Gap Pattern#2, Gap Pattern#3 and Gap Pattern#4.

In an embodiment of the present disclosure, the network device 102, when configuring the measurement configuration information, adds a priority of a corresponding measurement gap to each piece of measurement gap configuration information so that the user equipment 101 can selectively perform measurements based on the priority.

An embodiment of the present disclosure provides a method for configuring a measurement gap, applied to the user equipment 101. Referring to FIG. 6, FIG. 6 is a flowchart of a method for configuring a measurement gap illustrated according to an exemplary embodiment. As shown in FIG. 6, the method includes steps S601~S603, specifically:
Step S601, receiving, by the user equipment 101, measurement configuration information sent by the network device 102, where the measurement configuration information includes a plurality of pieces of measurement gap configuration information, and different pieces of measurement gap configuration information correspond to different measurement objects.
Step S602, in response to a measurement gap overhead determined based on the measurement configuration information being greater than a threshold value, repeating, by the user equipment 101, a determination of a measurement gap during which no measurement is to be performed, in ascending order of priority, until remaining measurement gap(s) have a measurement gap overhead less than or equal to the threshold value.
Step S603, performing a measurement on a measurement object of the remaining measurement gap.

Here, the measurement gap configuration information further includes a priority of a measurement gap.

In some possible implementations, in accordance with the configured priorities, the user equipment 101 may sequentially determine the measurement gaps during which no measurement is to be performed. For example, it first determines a measurement gap with the lowest priority during which no measurement is to be performed. After each determination of a measurement gap during which no measurement is to be performed, the user equipment 101 determines whether the overhead of the remaining measurement gap(s) is less than or equal to a threshold value. In response to the overhead being not less than or equal to the threshold value, the user equipment 101 continues to determine a measurement gap with the next lowest priority during which no measurement is to be performed. This process continues until the measurement gap overhead of the remaining measurement gap(s) is less than or equal to the threshold value.

In some possible implementations, the user equipment 101 may determine a measurement gap overhead based on a ratio of a sum of MGLs corresponding to a corresponding number of measurement gaps (included in measurement gap configurations of the plurality of pieces of measurement configuration information) during which measurements are to be performed in the first time length, to the first time length. The first time length is a length of time of the largest MGRP of MGRPs corresponding to the plurality of pieces of measurement gap configuration information.

In some possible implementations, the measurement gap overhead is used to characterize a total overhead of the corresponding number of measurement gaps during which measurements are to be performed.

In an example, the measurement gap overhead corresponds to a total overhead of all measurement gaps when a measurement gap during which no measurement is to be performed is not determined.

In an example, in each determination of a measurement gap during which no measurement is to be performed, the measurement gap overhead corresponds to a total overhead of the remaining portion of the measurement gaps.

### In the first example:

The measurement configuration information includes Gap Pattern#1, Gap Pattern#2, and Gap Pattern#3. In this example, the first time length is the length of time of the MGRP of Gap Pattern#2 or the MGRP of Gap Pattern#3, i.e., the first time length is 80ms. The measurement gaps are prioritized in descending order as follows: Gap Pattern#1, Gap Pattern#2 and Gap Pattern#3.

As shown in FIG. 7, after receiving the measurement configuration information sent by the network device 102, the user equipment 101 may determine that the measurement gap overhead is (44/80)%=55% based on the measurement configuration information. In this case, the measurement gap overhead is greater than a threshold value that may be set between 30% and 40%.

In this example, to reduce the measurement gap overhead, the Gap Pattern#3 with the lowest priority can be first determined, in the order of priority, as the one during which no measurement is to be performed. At this stage, the measurement gap overhead of the remaining gaps is (6×4+10)/80 = 42%, which is still greater than the threshold value. Therefore, the process of determining the measurement gap during which no measurement is to be performed continues. Next, Gap Pattern #2 with the second lowest priority is determined as the one during which no measurement is to be performed. At this stage, the measurement gap overhead of the remaining gaps is: (6×4)/80 = 30%, which is less than or equal to the threshold value.

Therefore in this example, only the measurement during Gap Pattern#1 may be performed.

### In the second example:

The measurement configuration information includes Gap Pattern#1, Gap Pattern#2, and Gap Pattern#3. The first time length is the length of time of the MGRP of Gap Pattern#2 or the MGRP of Gap Pattern#3, i.e., the first time length is 80ms. The measurement gaps are prioritized in descending order as follows: Gap Pattern#1, Gap Pattern#2 and Gap Pattern#3. The threshold value may be configured as 30ms.

Referring to FIG. 7 or FIG. 9, in combination with the MGRPs of different pieces of measurement configuration information, it can be determined that there are four Gap#1, one Gap#2, and one Gap#3 included in the first time length, and the sum of the MGLs of these three measurement gaps, i.e., the measurement gap overhead, in the first time length is 44ms.

In this example, the measurement gap overhead is greater than the threshold value. The user equipment 101 may first determine, following the order of priority from lowest to highest, Gap Pattern#3 with the lowest priority during which no measurement is to be performed. At this stage, the measurement gap overhead is 6×4 + 10 = 34 (ms), which is still greater than the threshold value. Therefore, the process of determining the measurement gap during which no measurement is to be performed continues. Next, Gap Pattern#2 with the second lowest priority is determined as the one during which no measurement is to be performed. At this stage, it is determined that the measurement gap overhead is 6×4 = 24 (ms), which is less than the threshold value.

In this example, only the measurement during Gap Pattern#1 may be performed.

In the embodiments of the present disclosure, the user equipment 101 may selectively determine, in order of priority, the measurement gaps during which measurements are to be performed, so as to be able to complete the measurement during the measurement gap with the highest priority on the basis of minimizing the measurement gap overhead, which is conducive for the network device 102 to achieve accurate scheduling.

An embodiment of the present disclosure provides a method for configuring a measurement gap, applied to the user equipment 101. The method includes steps S601 to S603, in which repeating the determination of a measurement gap during which no measurement is to be performed in step S602 may include:
Step S602-1, determining at least one unit time length, where different unit time lengths included in the at least one unit time length have the same length, each unit time length corresponds to at least two measurement gaps, and each unit time length is a length of time of a smallest MGRP of MGRPs of the corresponding at least two measurement gaps.
Step S602-2, according to an order of unit time lengths, sequentially determining within each unit time length, in ascending order of priority, a single measurement gap during which no measurement is to be performed among the at least two measurement gaps corresponding to each unit time length, and after each determination of the single measurement gap during which no measurement is to be performed, determining a measurement gap overhead corresponding to the remaining measurement gap(s).

In some possible implementations, the user equipment 101 may screen the measurement gap during which the measurement is to be performed, in order of priority within a unit time length, denoted as min (MGRPi). In response to the screening within one unit time length still not satisfying a measurement gap overhead less than or equal to a threshold value, the screening may continue within a next unit time length.

In some possible implementations, each unit time length may be considered as one group, and each group may include a different number of measurement gaps, such as including one measurement gap or at least two measurement gaps.

In some possible implementations, the unit time lengths, or groups, including at least two measurement gaps are sorted in time axis order. In a first group ahead of the time axis, one measurement gap during which no measurement is to be performed is determined at a time, and after each determination of the measurement gap during which no measurement is to be performed, a calculation is made of the measurement gap overhead corresponding to the remaining measurement gaps.

In response to the measurement gap overhead being less than or equal to the threshold value, a corresponding measurement of the remaining measurement gap may be performed. In response to the measurement gap overhead still being greater than the threshold value, in a second group after the first group, one measurement gap during which no measurement is to be performed is determined at a time, and after each determination of the measurement gap during which no measurement is to be performed, a calculation is made of the measurement gap overhead corresponding to the remaining measurement gaps until the measurement gap overhead is satisfied to be less than or equal to the threshold value, and the measurements corresponding to the remaining measurement gaps at that time are performed. In the embodiments of the present disclosure, the remaining measurement gap is specifically a measurement gap remaining in the plurality of measurement gaps after excluding the measurement gap during which no measurement is to be performed.

In this manner, screening is performed first in any unit time length or in any group, and then in the next unit time length or in the next group, until a measurement gap overhead that satisfies the threshold requirement can be obtained. In response to consistently failing to meet the measurement gap overhead requirement, this gap measurement may not be performed.

In some possible implementations, the user equipment 101 may determine, in a first time length, a measurement gap overhead based on a ratio of a sum of MGLs corresponding to a corresponding number of measurement gaps (contained within measurement gap configurations of the plurality of pieces of measurement configuration information) during which measurements are to be performed, to the first time length. The first time length is a length of time of the largest MGRP of MGRPs corresponding to the plurality of pieces of measurement gap configuration information. Herein, the "corresponding number of measurement gaps during which measurements are to be performed" refers to measurement gaps, during which measurements are to be performed, that remain in the case where the result, obtained after the comparisons with the threshold value are performed sequentially based on the sum of the measurement gap overheads for all measurement gaps involved in the measurement configuration information, is greater than the threshold value.

In some possible implementations, the at least one unit time length is not limited to adjacent unit time lengths, nor is it used to limit the order of screening within the at least one unit time length. There may be at least two measurement gaps included within the at least one unit time length.

### In an example:

The measurement configuration information includes Gap Pattern#1, Gap Pattern#2, and Gap Pattern#3. In this example, the first time length is the length of time of the MGRP of Gap Pattern#2 or the MGRP of Gap Pattern#3, i.e., the first time length is 80ms. The measurement gaps are prioritized in descending order as follows: Gap Pattern#1, Gap Pattern#2 and Gap Pattern#3. There are four unit time lengths included within the first time length, i.e., the first unit time length T1, the second unit time length T2, the third unit time length T3, and the fourth unit time length T4, respectively. Each unit time length is the length of time of the MGRP of Gap Pattern#1, i.e., 20ms. In this case, at least two measurement gaps are included within T1 and T4.

As shown in FIG. 7, after receiving the measurement configuration information sent by the network device 102, the user equipment 101 may determine that the measurement gap overhead is (44/80)%=55% based on the measurement configuration information. In this case, the measurement gap overhead is greater than a threshold value, which may be set between 30% and 40%.

In this example, following the sequence from T1 to T4, individual measurement gaps during which no measurement is to be performed may be determined successively in T1, in ascending order of priority until the measurement gap overhead is less than or equal to a threshold value.

For example, Gap Pattern#2 with low priority, during which no measurement is to be performed, is first determined in T1 for the first time. Then, it is determined that the measurement gap overhead at this stage is (6×4 + 10×1)/80 = 42%, which is still greater than the threshold. In response to the fact that T1 also contains a measurement gap of low priority, such as Gap Pattern#4, Gap Pattern#4 during which no measurement is to be performed is determined for the second time, and the measurement gap overhead is determined again. Corresponding to this example, there is Gap Pattern#1 with the highest priority remaining in T1 at this stage and can be retained.

Then, the screening is performed in the next unit time length T4. The same approach is taken in T4 to successively determine the individual measurement gaps during which no measurement is to be performed. For example, the first determination in T4 is made to determine Gap Pattern#3 with a low priority as the one during which no measurement is to be performed, and then it is determined that the measurement gap overhead at this stage is (6×4)/80 = 30%, which is less than or equal to the threshold value. Therefore in this example, only the measurement during Gap Pattern#1 may be performed.

In embodiments of the present disclosure, the determination of measurement gaps during which no measurement is to be performed may be carried out one by one in at least one unit time length, in a certain order of priority, thereby maximizing the retention of the measurement gaps during which measurements are to be performed while reducing the overhead of the measurement gaps.

An embodiment of the present disclosure provides a method for configuring a measurement gap, applied to the user equipment 101. Referring to FIG. 8, FIG. 8 is a flowchart of a method for configuring a measurement gap illustrated according to an exemplary embodiment. As shown in FIG. 8, the method includes steps S801~S804, specifically:
Step S801, receiving, by the user equipment 101, measurement configuration information sent by the network device 102, where the measurement configuration information includes a plurality of pieces of measurement gap configuration information, and different pieces of measurement gap configuration information correspond to different measurement objects.
Step S802, in response to a measurement gap overhead determined based on the measurement configuration information being less than or equal to a threshold value, determining at least two measurement gaps that overlap in a time domain based on the plurality of pieces of measurement gap configuration information.
Step S803, determining a measurement gap with the highest priority among the at least two measurement gaps.
Step S804, performing a measurement corresponding to the measurement gap with the highest priority.

In this case, the measurement gap configuration information further includes a priority of the measurement gap.

In some possible implementations, for measurement gaps that overlap in the measurement time domain interval, the user equipment 101 may determine, in order of priority, not to perform measurements during the measurement gap with a low priority.

### In an example:

As shown in FIG. 9, the measurement configuration information includes Gap Pattern#1 (Gap#1) and Gap Pattern#4 (Gap#4), and the measurement time domain intervals of Gap Pattern#1 and Gap Pattern#4 overlap. And the priority of Gap Pattern#1 is higher than the priority of Gap Pattern#4.

In this example, the user equipment 101, in accordance with the measurement configuration information, may be informed that Gap Pattern#1 has a higher priority than Gap Pattern#4, and thus may perform the measurement during Gap Pattern#1 without performing the measurement corresponding to Gap Pattern#4.

In embodiments of the present disclosure, the user equipment 101 may reasonably determine the measurement behavior in a scenario where there is an overlap in the measurement gaps to ensure the measurement effect.

An embodiment of the present disclosure provides a method for configuring a measurement gap, applied to the user equipment 101. The method includes steps S301~S302, and further includes:
Step S301', receiving, by the user equipment 101, information sent by the network device 102 for indicating a threshold value.

In some possible implementations, the network device may carry a threshold value in the measurement configuration information.

In some possible implementations, step S301 may be: receiving Radio Resource Control (RRC) signaling sent by the network device 102, the RRC signaling including the measurement configuration information.

In embodiments of the present disclosure, corresponding to a scenario in which the threshold value is determined and configured by the network device 102, the user equipment 101 may receive the measurement configuration information as well as the threshold value that are sent in a set manner by the network device 102.

An embodiment of the present disclosure provides a method for configuring a measurement gap, which is performed by the network device 102. Referring to FIG. 10, FIG. 10 is a flowchart of a method for configuring a measurement gap illustrated according to an exemplary embodiment. As shown in FIG. 10, the method includes step S1001, specifically:
Step S1001, sending, by the network device 102, measurement configuration information to the user equipment 101, where the measurement configuration information includes a plurality of pieces of measurement gap configuration information, and different pieces of measurement gap configuration information correspond to different measurement objects.

In an embodiment of the present disclosure, the network device 102 may configure the user equipment 101 with a plurality of pieces of measurement gap configuration information for different measurement objects, and the user equipment 101 can adaptively perform measurements based on the relationship between the plurality of pieces of measurement gap configuration information and the threshold value used for the measurement gap overhead control, thereby facilitating the reduction of the overhead of the measurement gaps.

An embodiment of the present disclosure provides a method for configuring a measurement gap, which is performed by the network device 102. The method includes the step S1001':
Step S1001', sending, by the network device 102, a Radio Resource Control (RRC) signaling to the user equipment 101, the RRC signaling including the measurement configuration information.

In some possible implementations, the measurement configuration information also includes a priority of the measurement gap.

In the embodiments of the present disclosure, the network device 102 may send the measurement gap configuration information and priority by means of RRC signaling so that the user equipment 101 can selectively perform measurements based on the priority of the measurement gap, reducing the measurement gap overhead.

An embodiment of the present disclosure provides a method for configuring a measurement gap, which is performed by the network device 102. The method includes:
Step S1000, determining a threshold value, the threshold value being used for measure gap overhead control.
Step S1001", sending to the user equipment information for indicating the threshold value, and measurement configuration information, where the measurement configuration information includes a plurality of pieces of measurement gap configuration information, and different pieces of measurement gap configuration information correspond to different measurement objects.

In the embodiments of the present disclosure, the network device 102 may configure both the determined threshold value and the measurement gap configuration information to the user equipment 101 so as to facilitate the user equipment 101 to perform a judgment of the measurement gap overhead based on the measurement gap configuration information and the threshold value, which facilitates the user equipment 101 to adaptively perform measurements to reduce the measurement gap overhead.

Based on the same concept as the above method embodiments, an embodiment of the present disclosure also provides a communication device that may have the function of the user equipment 101 in the above method embodiments and be used to perform the steps provided in the above embodiments to be performed by the user equipment 101. The function may be realized through hardware or through software or hardware executing corresponding software. The hardware or software includes one or more modules corresponding to the above-described function.

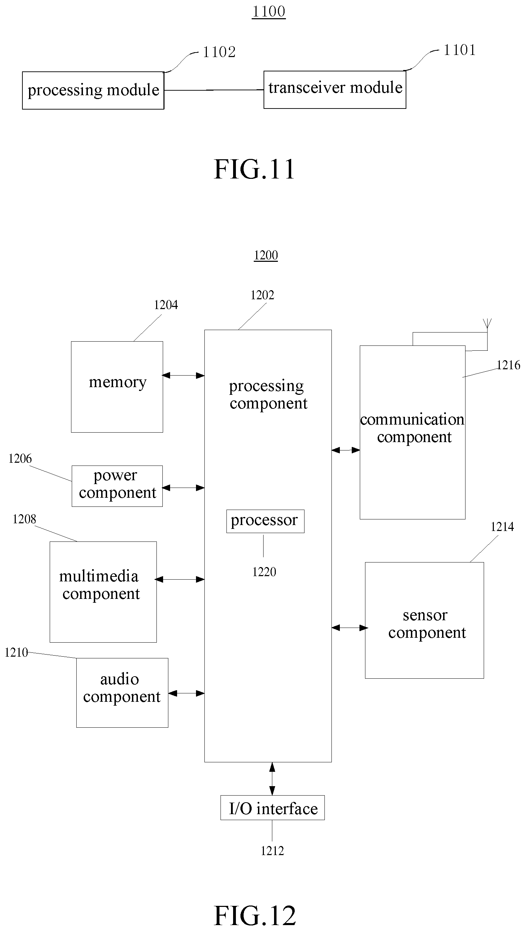

In one possible implementation, the device 1100 as shown in FIG. 11 may serve as the user equipment 101 involved in the above method embodiments and perform the steps performed by the user equipment 101 in one of the above method embodiments. The device 1100 includes a transceiver module 1101 and a processing module 1102 coupled to each other, where the processing module 1102 may be used for the communication device to perform processing operations, such as generating information/messages to be sent or processing received signals to obtain the information/messages, and the transceiver module 1101 may be used to support a communication device for communication.

In performing the above steps performed by the user equipment 101, the transceiver module 1101 is used to receive measurement configuration information sent by the network device 102, where the measurement configuration information includes a plurality of pieces of measurement gap configuration information, and different pieces of measurement gap configuration information corresponds to different measurement objects; and the processing module 1102 is used to perform a measurement on a measurement object based on the measurement configuration information and a threshold value, where the threshold value is used for measurement gap overhead control.

When the communication device is the user equipment 101, it may also include a device as shown in FIG. 12. FIG. 12 is a block diagram of a device 1200 for transmitting user device capabilities illustrated according to an exemplary embodiment. For example, the device 1200 may be a cell phone, a computer, a digital broadcast terminal, a message transceiver device, a game console, a tablet device, a medical device, a fitness device, a personal digital assistant, and the like.

Referring to FIG. 12, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 generally controls the overall operation of the device 1200, such as operations associated with display, telephone calling, data communication, camera operation, and recording operations. The processing component 1202 may include one or more processors 1220 to execute instructions to accomplish all or some of the steps of the method described above. In addition, the processing component 1202 may include one or more modules to facilitate interaction between the processing component 1202 and other components. For example, the processing component 1202 may include a multimedia module to facilitate interaction between the multimedia component 1208 and the processing component 1202.

The memory 1204 is configured to store various types of data to support operation at the device 1200. Examples of such data include instructions for any application or method operated on the device 1200, contact data, phone book data, messages, pictures, videos, etc. The memory 1204 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or CD-ROM.

The power component 1206 provides power to various components of the device 1200. The power component 1206 may include a power management system, one or more power sources, and other components associated with generating, managing, and distributing power for the device 1200.

The multimedia component 1208 includes a screen providing an output interface between the device 1200 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes and gestures on the touch panel. The touch sensors may not only sense the boundaries of a touch or swipe action, but also detect the duration and pressure associated with the touch or swipe operation. In some embodiments, the multimedia component 1208 includes a front camera and/or a rear camera. The front camera and/or rear camera may receive external multimedia data when the device 1200 is in an operating mode, such as a shooting mode or a video mode. Each front camera and rear camera may be a fixed optical lens system or have a focal length and optical zoom capability.

The audio component 1210 is configured to output and/or input audio signals. For example, the audio component 1210 includes a microphone (MIC) configured to receive external audio signals when the device 1200 is in an operational mode, such as a call mode, a recording mode, and a voice recognition mode. The received audio signals may be further stored in memory 1204 or sent via communication component 1216. In some embodiments, the audio component 1210 further includes a speaker for outputting audio signals.

The I/O interface 1212 provides an interface between the processing component 1202 and a peripheral interface module. The peripheral interface module may be a keypad, a click wheel, a button, and the like. These buttons may include, but are not limited to: a home button, a volume button, a start button, and a lock button.

The sensor component 1214 includes one or more sensors for providing an assessment of various aspects of the state of the device 1200. For example, the sensor component 1214 may detect an open/closed state of the device 1200, the relative positioning of components, such as the components being the display and keypad of the device 1200. The sensor component 1214 may also detect a change in the position of the device 1200 or of a component of the device 1200, the presence or absence of user contact with the device 1200, a change in the orientation of the device 1200 or acceleration/deceleration, and a change in temperature of the device 1200. The sensor component 1214 may include a proximity sensor configured to detect the presence of a nearby object in the absence of any physical contact. The sensor component 1214 may also include an optical sensor, such as a CMOS or CCD image sensor, for use in imaging applications. In some embodiments, the sensor component 1214 may also include an acceleration sensor, a gyroscope sensor, a magnetic sensor, a pressure sensor, or a temperature sensor.

The communication component 1216 is configured to facilitate communication between the device 1200 and other devices by wired or wireless means. The device 1200 may access a wireless network based on a communication standard, such as Wi-Fi, 4G or 5G, or a combination thereof. In an exemplary embodiment, the communication component 1216 receives broadcast signals or broadcast-related information from an external broadcast management system via a broadcast channel. In an exemplary embodiment, the communication component 1216 further includes a near field communication (NFC) module to facilitate short range communication. For example, the NFC module may be implemented based on Radio Frequency Identification (RFID) technology, Infrared Data Association (IrDA) technology, Ultra Wide Band (UWB) technology, Bluetooth^{®} (BT) technology and other technologies.

In exemplary embodiments, the device 1200 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In exemplary embodiments, there is also provided a non-transitory computer-readable storage medium including instructions, such as a memory 1204 including instructions, the instructions being executable by a processor 1220 of the device 1200 to accomplish the methods described above. For example, the non-transitory computer-readable storage medium may be ROM, random access memory (RAM), CD-ROM, magnetic tape, floppy disks, and optical data storage devices, among others.

Based on the same concept as the above method embodiments, an embodiment of the present disclosure also provides a communication device that may have the function of the network device 102 in the above method embodiments and be used to perform the steps provided in the above embodiments to be performed by the network device 102. The function may be realized through hardware or through software or hardware executing corresponding software. The hardware or software includes one or more modules corresponding to the above-described function.

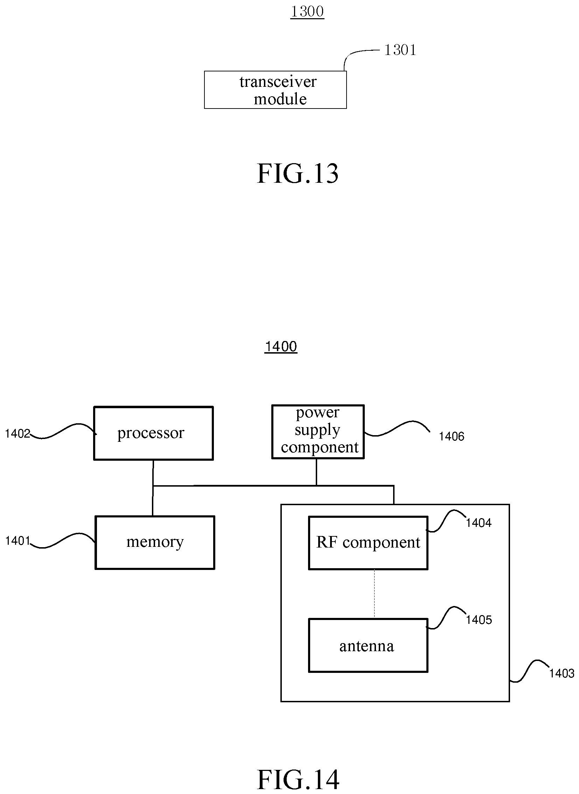

In one possible implementation, a device 1300, as shown in FIG. 13, may serve as the network device 102 involved in the above method embodiments and perform the steps performed by the network device 102 in one of the above method embodiments. The device 1300 includes a transceiver module 1301, where the transceiver module 1301 may be used to support a communication device for communication.

In performing the steps performed by the network device 102 described above, the transceiver module 1301 is used to send measurement configuration information to the user equipment 101, where the measurement configuration information includes a plurality of pieces of measurement gap configuration information, and different pieces of measurement gap configuration information correspond to different measurement objects.

When the communication device is the network device 102, the structure may also be as shown in FIG. 14. As shown in FIG. 14, the device 1400 includes a memory 1401, a processor 1402, a transceiver component 1403, and a power supply component 1406. The memory 1401 is coupled to the processor 1402, which may be used to store programs and data necessary for the communication device 1400 to implement various functions. The processor 1402 is configured to support the communication device 1400 in performing the corresponding function in the method described above, and this function may be realized by calling a program stored in the memory 1401. The transceiver component 1403 may be a wireless transceiver that may be used to support the communication device 1400 in performing receiving signaling and/or data, and transmitting signaling and/or data, over a wireless air port. The transceiver component 1403 may also be referred to as a transceiver unit or a communication unit, and the transceiver component 1403 may include an radio frequency (RF) component 1404 and one or more antennas 1405, where the RF component 1404 may be a remote radio unit (RRU), which may be used specifically for transmission of RF signals and conversion of RF signals to baseband signals, and the one or more antennas 1405 may be specifically used to perform radiation and reception of RF signals.

When the communication device 1400 needs to send data, the processor 1402 may output a baseband signal to a radio frequency unit after baseband processing of the data to be sent, and the radio frequency unit will send the radio frequency signal through an antenna in the form of electromagnetic waves after radio frequency processing of the baseband signal. When there is data sent to the communication device 1400, the radio frequency unit receives the radio frequency signal through the antenna, converts the radio frequency signal to a baseband signal, and outputs the baseband signal to the processor 1402, which converts the baseband signal to data and processes the data.

After considering the specification and practicing the invention disclosed here, those skilled in the art will easily conceive of other embodiments of the present disclosure. This application is intended to cover any modifications, uses, or adaptive changes of the embodiments of the present disclosure, which follow the general principles of the disclosed embodiments and include commonly known knowledge or customary technical means in the technical field that are not explicitly disclosed in this disclosure. The specification and examples are to be regarded as exemplary only, and the true scope and spirit of the embodiments of the present disclosure are indicated by the following claims.

It should be understood that the embodiments of the present disclosure are not limited to the precise structures that have been described above and illustrated in the drawings, and various modifications and changes may be made without departing from the scope of the disclosure. The scope of the embodiments of the present disclosure is limited only by the appended claims.

### Industrial Applicability

In the method of the present disclosure, after receiving the plurality of pieces of measurement gap configuration information configured by the network device, the user equipment is able to adaptively perform measurements based on the relationship between the plurality of pieces of measurement gap configuration information and the threshold value used for measurement gap overhead control, thereby facilitating the reduction of the overhead of the measurement gaps so as to be able to ensure the continuity for scheduling data by the serving cell.

## Claims

1. A method for configuring a measurement gap, performed by user equipment, the method comprising:
receiving measurement configuration information sent by a network device, wherein the measurement configuration information comprises a plurality of pieces of measurement gap configuration information, different pieces of measurement gap configuration information corresponding to different measurement objects; and
performing a measurement on a measurement object based on the measurement configuration information and a threshold value, wherein the threshold value is configured for measurement gap overhead control.

2. The method of claim 1, wherein
performing the measurement on the measurement object based on the measurement configuration information and the threshold value, comprises:
in response to a measurement gap overhead determined based on the measurement configuration information being greater than the threshold value, repeating, in a predetermined measurement gap order among a plurality of measurement gaps, a determination of a measurement gap during which no measurement is to be performed, until a measurement gap overhead of a measurement gap remaining in the plurality of measurement gaps is less than or equal to the threshold value, and performing the measurement on the measurement object corresponding to the remaining measurement gap;
wherein the measurement gap overhead is configured to characterize a total overhead of a corresponding number of measurement gaps during which measurements are to be performed.

3. The method of claim 1, wherein
performing the measurement on the measurement object based on the measurement configuration information and the threshold value, comprises:
in response to a measurement gap overhead determined based on the measurement configuration information being less than or equal to the threshold value, performing the measurement on a corresponding measurement object based on the plurality of pieces of measurement gap configuration information.

4. The method of any one of claims 1 to 3, wherein performing the measurement on the measurement object based on the measurement configuration information and the threshold value, comprises:
determining, based on the plurality of pieces of measurement gap configuration information, at least two measurement gaps that overlap in a time domain; and
performing the measurement only on the measurement object of one of the at least two measurement gaps, without performing a measurement on a measurement object corresponding to a measurement gap remaining in the at least two measurement gaps.

5. The method of claim 1, wherein
the measurement gap configuration information comprises a priority of a measurement gap.

6. The method of claim 5, wherein
performing the measurement on the measurement object based on the measurement configuration information and the threshold value, comprises:
in response to a measurement gap overhead determined based on the measurement configuration information being greater than the threshold value, repeating, in ascending order of priority, a determination of a measurement gap during which no measurement is to be performed, until a remaining measurement gap has a measurement gap overhead less than or equal to the threshold value; and
performing the measurement on the measurement object of the remaining measurement gap.

7. The method of claim 6, wherein repeating the determination of the measurement gap during which no measurement is to be performed comprises:
determining at least one unit time length, wherein the at least one unit time length has a same length of time, each unit time length corresponds to at least two measurement gaps, and each unit time length is a length of time of a smallest Measurement Gap Repetition Period (MGRP) of MGRPs of the corresponding at least two measurement gaps; and
according to an order of the at least one unit time length, sequentially determining within each unit time length, in ascending order of priority, a single measurement gap during which no measurement is to be performed among the at least two measurement gaps corresponding to each unit time length, and after each determination of the single measurement gap during which no measurement is to be performed, determining a measurement gap overhead corresponding to the remaining measurement gap.

8. The method of claim 5, wherein performing the measurement on the measurement object based on the measurement configuration information and the threshold value, comprises:
in response to a measurement gap overhead determined based on the measurement configuration information being less than or equal to the threshold value, determining at least two measurement gaps that overlap in a time domain based on the plurality of pieces of measurement gap configuration information;
determining a measurement gap with a highest priority among the at least two measurement gaps; and
performing the measurement corresponding to the measurement gap with the highest priority.

9. The method of claim 2, 3, 6 or 7, wherein
the measurement gap overhead is a ratio of a sum of a corresponding number of Measurement Gap Lengths (MGLs) of measurements to be performed in a first time length to the first time length, the first time length being a length of time of a largest Measurement Gap Repetition Period (MGRP) of MGRPs corresponding to the plurality of pieces of measurement gap configuration information.

10. The method of claim 1, wherein
the threshold value is agreed upon in a protocol.

11. The method of claim 1, wherein
receiving information sent by the network device for indicating the threshold value.

12. The method of claim 1, wherein receiving measurement configuration information sent by the network device, comprises:
receiving Radio Resource Control (RRC) signaling sent by the network device, wherein the RRC signaling comprises the measurement configuration information.

13. A method for configuring a measurement gap, performed by a network device, the method comprising:
sending measurement configuration information to user equipment, wherein the measurement configuration information comprises a plurality of pieces of measurement gap configuration information, different pieces of measurement gap configuration information corresponding to different measurement objects.

14. The method of claim 13, wherein sending the measurement configuration information to the user equipment comprises:
sending Radio Resource Control (RRC) signaling to the user equipment, wherein the RRC signaling comprises the measurement configuration information.

15. The method of claim 13, further comprising:
determining a threshold value, wherein the threshold value is configured for measurement gap overhead control; and
sending to the user equipment information for indicating the threshold value.

16. The method of claim 13, wherein
the measurement configuration information further comprises a priority of a measurement gap.

17. A communication device, being configured for user equipment, the device comprising:
a transceiver module configured to receive measurement configuration information sent by a network device, wherein the measurement configuration information comprises a plurality of pieces of measurement gap configuration information, different pieces of measurement gap configuration information corresponding to different measurement objects; and
a processing module configured to perform a measurement on a measurement object based on the measurement configuration information and a threshold value, wherein the threshold value is configured for measurement gap overhead control.

18. A communication device, being configured for a network device, the device comprising:
a transceiver module configured to send measurement configuration information to user equipment, wherein the measurement configuration information comprises a plurality of pieces of measurement gap configuration information, different pieces of measurement gap configuration information corresponding to different measurement objects.

19. A communication device, comprising a processor and a memory, wherein
the memory is configured to store a computer program; and
the processor is configured to execute the computer program to implement the method of any one of claims 1 to 12.

20. A communication device, comprising a processor and a memory, wherein
the memory is configured to store a computer program; and
the processor is configured to execute the computer program to implement the method of any one of claims 13 to 16.

21. A computer-readable storage medium, having stored therein instructions that, when the instructions are invoked for execution on a computer, cause the computer to perform the method of any one of claims 1 to 12.

22. A computer-readable storage medium, having stored therein instructions that, when the instructions are invoked for execution on a computer, cause the computer to perform the method of any one of claims 13 to 16.
